# EUROPEAN PATENT SPECIFICATION

(11) **EP 3 520 627 B1**
(45) Date of publication and mention of the grant of the patent: **04.11.2026**
(21) Application number: 17856207.0
(22) Date of filing: 27.09.2017
(51) Int. Cl.: A23L 2/02, A23L 2/00, A23L 2/52

(54) **LOW-CARBOHYDRATE SQUEEZED CARROT JUICE AD CARROT-CONTAINING BEVERAGE**
KOHLENHYDRATARMER AUSGEPRESSTER KAROTTENSAFT UND KAROTTENHALTIGES GETRÄNK
JUS DE CAROTTE PRESSÉE À FAIBLE TENEUR EN GLUCIDES ET BOISSON CONTENANT DE LA CAROTTE

(30) Priority: 30.09.2016 JP 2016193057
(43) Date of publication of application: 07.08.2019
(73) Proprietor: Kirin Holdings Kabushiki Kaisha, Tokyo 164-0001 (JP)
(72) Inventor: ICHIKAWA Shintaro, Tokyo 164-0001 (JP); OGAWA Kaori, Tokyo 164-0001 (JP)
(74) Representative: Hoffmann Eitle
(86) International application number: PCT/JP2017/034922
(87) International publication number: WO 2018/062258

(56) References cited:
- WO-A1-2016/092768
- WO-A1-2016/092768
- JP-A- 2007 209 268
- US-A1- 2008 075 831
- NAZZARO, F. ET AL.: "Synbiotic potential of carrot juice supplemented with Lactobacillus spp. and inulin or fructooligosaccharides", J SCI FOOD AGRIC, vol. 88, no. 13, 2008, pages 2271 - 2276, XP055308544
- "Morning multivitamin & multifruit carrot drink with inulin", MINTEL GNPD, 2004, [retrieved on 20171207]
- "High fiber fruit & vegetable juice drink", MINTEL GNPD, 2015, [retrieved on 20171207]
- "100% orange fruit juice smoothie & boosts", MINTEL GNPD, 2015, [retrieved on 20171207]
- "Vegetable cocktail", MINTEL GNPD, 2007, [retrieved on 20171201]
- "Fibre pineapple mango juice", MINTEL GNPD, July 2016 (2016-07-01), [retrieved on 20171201]
- "Orange and Acerola Fruit Juice", MINTEL GNPD, 2014, [retrieved on 20171207]
- "Multi fruit juice", MINTEL GNPD, 2015, [retrieved on 20171207]
- "Gefilus mehu orange juice", MINTEL GNPD, 2002, [retrieved on 20171207]
- "Red fruits smoothie", MINTEL GNPD, 2015, [retrieved on 20171207]

## Description

### CROSS-REFERENCE TO RELATED APPLICATION

The present application enjoys the benefit of priority from the prior Japanese Patent Application No. 2016-193057 filed on September 30, 2016.

### TECHNICAL FIELD

The present invention relates to low-saccharide squeezed carrot juice and carrot-containing beverage, and, more specifically, to low-saccharide squeezed carrot juice and carrot-containing beverage each having an improved flavor.

### BACKGROUND ART

Insufficient intake of vegetables accompanying changes in eating habits and lifestyles in recent years causes nutritional imbalance, and the influences thereof on health have been concerned for a long time. The Ministry of Health, Labour and Welfare settled on "Health Japan 21 (the second term)" in 2012, setting a target of increasing the daily intake of vegetables to 350 g, on average, for prevention of lifestyle-related diseases and health maintenance. Although the necessity to increase the intake of vegetables is thus recognized, it is not easy to continue eating a predetermined amount of vegetables every day. With increasing importance of continuous eating of vegetables, vegetable beverages allow easy intake of vegetables and thus are widely popular for making up for the shortage of vegetables and maintaining health.

On the other hand, the reduction in intake of carbohydrates is demanded due to increase in health consciousness in recent years, and is also said to become a future social problem. This is also true of vegetable beverages since they contain a vegetable-derived carbohydrate, and it can be said to be desirable also to reduce the carbohydrate content of the vegetable beverages as much as possible.

For example, a low-saccharide vegetable beverage can be provided by using a vegetable having a low carbohydrate content as a raw material. However, such a vegetable beverage involves the problem of a light taste. In order to solve such a problem, there has been proposed a technique of strengthening the rich taste of a low-carbohydrate vegetable beverage (Patent Document 1). Patent Document 2 discloses methods for producing squeezed carrot juice. Non-patent Document 3 and patent document 4 provide information on inulin, fructooligosaccharides and their uses.

### REFERENCE LIST

### [Patent Document]

Patent Document 1: JP 2015-223167 A
Patent Document 2: WO 2016/092768 A
Non-patent Document 3: NAZZARO, F. et al., "Synbiotic potential of carrot juice supplemented with Lactobacillus spp. and inulin or fructooligosaccharides", J Sci Food Agric, vol. 88, no. 13, pages 2271 - 2276, http://dx.doi.org/10.1002/jsfa.3343
Patent Document 4: JP 2007-209268 A

### SUMMARY OF THE INVENTION

However, the low-carbohydrate vegetable beverage described above comprises, as a raw material, a vegetable having a low carbohydrate content, and thus is limited in terms of the vegetables used therein. For example, carrot having a high sucrose content is not indicated as a raw material to be used in Patent Document 1.

The present inventors have found that the reduction in saccharide content in squeezed carrot juices, carrot-containing vegetable mix juices and carrot-containing vegetable fruit mix juices impairs natural carrot aroma/taste, and that the natural carrot aroma/taste can be recovered by blending fructooligosaccharides in these beverages having a reduced saccharide content. Also, the present inventors have found that the aroma/taste recovering effect is attained also by using an inulin. The present invention is based on these findings.

An object of the present invention is to provide a low-saccharide squeezed carrot juice and a concentrate thereof as well as low-saccharide carrot-containing vegetable beverage and carrot-containing vegetable fruit beverage, in which natural carrot aroma/taste has been achieved, and methods for producing the same.

The present invention provides the inventions as specified in the appended claims and as described in more detail hereinbelow.

According to the present invention, natural carrot aroma/taste can be recovered by blending either or both of a fructooligosaccharide and an inulin in a low-saccharide squeezed carrot juice and a concentrate thereof as well as low-saccharide carrot-containing vegetable beverage and carrot-containing vegetable fruit beverage. Fructooligosaccharides and inulins have been used as foods for a long time and confirmed to be safe, and carrot contains excellent nutritional ingredients such as β-carotene. Therefore, the present invention can advantageously provide a squeezed carrot juice and a concentrate thereof as well as a carrot-containing vegetable beverage and a carrot-containing vegetable fruit beverage which are secure and safe and have a high nutritional value, without impairing their aroma/taste, while they are low in saccharides.

### DETAILED DESCRIPTION OF THE INVENTION

### <<Squeezed juice and concentrate as well as beverage according to present invention>>

The present invention provides a squeezed carrot juice and a concentrate thereof as well as a carrot-containing vegetable beverage and a carrot-containing vegetable fruit beverage, as specified in the appended claims, which are low in saccharides, i.e., have a reduced saccharide content. The term "saccharides" as used in the present invention means monosaccharide and disaccharide carbohydrates, including glucose, fructose, galactose, sucrose, maltose, lactose and the like.

The saccharide concentration of the squeezed carrot juice and the concentrate thereof according to the present invention as well as the carrot-containing vegetable beverages according to the present invention is set to 2.5 g/100 mL or less, preferably 2.0 g/100 mL or less. The saccharide concentration of the carrot-containing vegetable fruit beverage according to the present invention can be set to 4.5 g/100 mL or less, preferably 4.0 g/100 mL or less. The saccharide concentration can be measured by the high-performance liquid chromatographic method (HPLC method).

The squeezed carrot juice and the concentrate thereof according to the present invention as well as the carrot-containing beverages according to the present invention are reduced in saccharide concentration, and thus are calorie-reduced squeezed juice and the concentrate as well as calorie-reduced beverages. The term "calorie-reduced" as used in the present invention means that their calorie is reduced as compared with the calorie of a squeezed carrot juice (as well as, in some cases, any other vegetable juice and/or fruit juice) which serves as a raw material. Examples of the calorie-reduced beverages include beverages having a calorie of 30 kcal/100 mL or less, 25 kcal/100 mL or less, or 20 kcal/100 mL or less. The calorie of the beverage can be calculated based on the Atwater factor. The calorie reduction can be attained by processing, i.e., enzyme treatment or water addition treatment, of a raw material squeezed carrot juice or the like, as will be described later.

The low-saccharide squeezed carrot juice and the concentrate thereof as well as the low-saccharide carrot-containing vegetable beverage and carrot-containing vegetable fruit beverage according to the present invention are characterized by comprising either or both of a fructooligosaccharide and an inulin.

The "fructooligosaccharide" used in the present invention is an oligosaccharide in which 1 to 3 molecule(s) of fructose bind(s) to sucrose, including 1-kestose, nystose and fructofuranosyl nystose.

The "inulin" used in the present invention means a polymer obtained by sequentially binding at least one fructose to sucrose as a receptor through a β-2,1 bond by a transfer reaction, wherein at least four molecules of fructose bind to sucrose. In the present invention, a polymer in which 4 to 100 molecules of fructose bind to sucrose can be preferably used as the inulin.

The contents of the fructooligosaccharide and the inulin in the low-saccharide squeezed carrot juice and the concentrate thereof as well as the low-saccharide carrot-containing vegetable beverage and carrot-containing vegetable fruit beverage, according to the present invention, are adjusted to satisfy Formula (I) indicated in appended claim 1. In Formula (I), the lower limit 0.3 can be preferably 0.45, more preferably 0.6. The concentration of carbohydrate such as fructooligosaccharides and inulins can be measured by the high-performance liquid chromatographic method (HPLC method).

Formula (I) indicated in appended claim 1can be preferably Formula (II):
[Mathematical Formula 2] $0.3 \leq F + \frac{1}{3} I \leq 4$ (II) wherein F and I have the same meanings as defined in Formula (I).

Here, in Formula (II) indicated above, the lower limit 0.3 can be preferably 0.45, more preferably 0.6, and the upper limit 4 can be preferably 3.

When the low-saccharide squeezed carrot juice and the concentrate thereof as well as the low-saccharide carrot-containing vegetable beverage and carrot-containing vegetable fruit beverage, according to the present invention, contain only the fructooligosaccharide(s) among the fructooligosaccharide(s) and the inulin(s), the content of the fructooligosaccharide(s) can be set to 0.3 g/100 mL or more (for example, 0.3 to 4 g/100 mL), preferably to 0.45 g/100 mL or more (for example, 0.45 to 4 g/100 mL), more preferably 0.6 g/100 mL or more (for example, 0.6 to 4 g/100 mL).

When the low-saccharide squeezed carrot juice and the concentrate thereof as well as the low-saccharide carrot-containing vegetable beverage and carrot-containing vegetable fruit beverage, according to the present invention, contain only the inulin(s) among the fructooligosaccharide(s) and the inulin(s), the content of the inulin can be set to 0.9 g/100 mL or more (for example, 0.9 to 12 g/100 mL), preferably 1.35 g/100 mL or more (for example, 1.35 to 12 g/100 mL), more preferably 1.8 g/100 mL or more (for example, 1.8 to 12 g/100 mL).

The fructooligosaccharide and inulin which are defined as being contained in the squeezed juice and the concentrate as well as the beverage according to the present invention may be products obtained by *in situ* converting sucrose into a fructooligosaccharide or an inulin through enzyme treatment in a squeezed carrot juice (as well as, in some cases, any other vegetable juice and/or fruit juice). Specifically, the production of the fructooligosaccharide and inulin in the squeezed juice and the concentrate as well as the beverage according to the present invention can be attained by processing, i.e., enzyme treatment of a raw material squeezed carrot juice (as well as, in some cases, any other vegetable juice and/or fruit juice). Thus, the squeezed juice and the concentrate as well as the beverage according to the present invention can be free of a fructooligosaccharide and an inulin as a raw material.

The term "100% squeezed carrot juice" as used in the present invention means a product obtained by diluting a squeezed carrot juice obtained by squeezing carrot without water addition or concentration (straight squeezed carrot juice) and a concentrate of the squeezed juice, for example, by water addition, and returning the sugar content of the diluted liquid to that of the 100% squeezed carrot juice. The sugar content (Bx value) of the 100% squeezed carrot juice is for example 5 to 10, preferably 5 to 7, more preferably about 6.

The term "squeezed carrot juice" as used in the present invention includes not only the 100% squeezed carrot juice but also a diluted liquid of the squeezed carrot juice (adjusted to have a sugar content lower than that of the 100% squeezed carrot juice). The dilution for adjustment can be performed, for example, by water addition. Also, the sugar content (Bx value) of the diluted liquid of the squeezed carrot juice is, for example, 1 to 5.

The term "concentrate of the squeezed carrot juice" as used in the present invention includes a liquid adjusted to have a sugar content higher than that of the 100% squeezed carrot juice, for example, by removing moisture from the low-saccharide squeezed carrot juice of the present invention. Briefly, the low-saccharide squeezed carrot juice of the present invention can be prepared by adding moisture, in an amount which corresponds to that of the removed water, to the concentrate of the present invention. The sugar content (Bx value) of the concentrate of the present invention is for example 8 to 60, preferably 24 to 56.

The sugar content (Bx value) of the carrot-containing vegetable beverage and carrot-containing vegetable fruit beverage according to the present invention is for example 4 to 11, preferably 5 to 8. The sugar content (Bx value) of the carrot-containing vegetable fruit beverage according to the present invention is for example 6 to 12, preferably 7 to 10.

The "sugar content" (Bx value) (sometimes referred to simply as "Bx" herein) used in the present invention is an index which represents the total concentration of soluble solid contents (for example, a sugar, a protein, a peptide, and the like) contained in a solution, which is a value obtained by converting the refractive index of the solution measured at 20°C to the mass/mass% of a pure sucrose solution using the conversion table of ICUMSA (the International Commission for Uniform Methods of Sugar Analysis). The measurement of the refractive index at 20°C can be made by using a commercial sugar refractometer such as a saccharimeter produced by ATAGO CO., LTD.

The term "carrot-containing vegetable beverage" as used in the present invention means a vegetable beverage comprising carrot as a raw material. The carrot-containing vegetable beverage of the present invention may comprise only carrot as a vegetable or further comprise one or more kinds of vegetables other than carrot. Examples of the vegetables other than carrot include tomato, celery, canola flower, moroheiya (Jew's mallow), onion, parsley, asparagus, red bell pepper, cabbage, cauliflower, broccoli, pumpkin, red cabbage, green pepper, cresson, colored sweet potato, qing-geng-cai (spinach like green vegetable originating in China), eggplant, perilla, mugwort, kale, ginger, bitter gourd, radish, spinach, mitsuba (Japanese honewort), cucumber, Chinese cabbage, corn, green pea, potato, burdock, leek, basil, ashitaba (*Angelica keiskei*), Japanese mustard spinach, chicory, potherb mustard, Chinese radish, nozawana (*Brassica campestris var. hakabura*), beet, Welsh onion, green bean, lettuce, mung bean sprout, alfalfa sprout, and brussels sprout. The term "carrot-containing vegetable beverage" as used in the present invention includes carrot juices, carrot mix juices, carrot-containing vegetable juices and carrot-containing vegetable mix juices.

The term "carrot-containing vegetable fruit beverage" as used in the present invention means a vegetable fruit beverage comprising carrot as a raw material. The carrot-containing vegetable fruit beverage of the present invention may comprise only carrot as a vegetable or further comprise one or more kinds of vegetables other than carrot. Vegetables as indicated above can be used as the vegetables other than carrot. The carrot-containing vegetable fruit beverage of the present invention comprises one or more kinds of fruits, and examples of such fruits include apple, orange, lemon, pineapple, grapefruit, grape, mandarin orange, mango, passion fruit, banana, strawberry, peach, Asian pear, pear, coconut, apricot, guava, persimmon, litchi, cherry, cranberry, blueberry, lime, ume (Japanese apricot), kabosu (*Citrus sphaerocarpa*) and yuzu (*Citrus junos*). The term "carrot-containing vegetable fruit beverage" as used in the present invention includes carrot mix juices, carrot-containing vegetable fruit mix juices and carrot-containing fruit vegetable mix juices.

The carrot-containing vegetable beverage and carrot-containing vegetable fruit beverage according to the present invention contain the low-saccharide squeezed carrot juice or the concentrate thereof according to the present invention, in a preferred embodiment thereof.

The rate of carrot used in the carrot-containing vegetable beverage and carrot-containing vegetable fruit beverage according to the present invention can be set to 10% or more, 20% or more, or 30% or more. Here, the term "rate of carrot used" means a relative concentration of the squeezed carrot juice blended in the beverages when the concentration of the 100% squeezed carrot juice is defined as 100%, and, specifically, can be calculated based on the sugar content of the 100% squeezed carrot juice converted to 100%. For example, when the 100% squeezed carrot juice (sugar content: 6) is blended in the beverages of the present invention so that the final products have a sugar content of 3, the rate of carrot used is 50%. When a twofold-concentrated squeezed carrot juice (sugar content: 12) is blended in the beverages of the present invention so that the final products have a sugar content of 6, the rate of carrot used is 100%.

The squeezed carrot juice and the concentrate thereof as well as the carrot-containing vegetable beverage and carrot-containing vegetable fruit beverage, according to the present invention, are characterized by satisfactorily having natural carrot aroma/taste despite the fact that their saccharide concentration is reduced to a predetermined value or less. The term "natural carrot aroma/taste" as used includes the body feeling, full-flavored feeling, and aftertaste inherent in the squeezed carrot juice. The phrase "improve the flavor" as used herein means recovering the "natural carrot aroma/taste" lost, for example, by reducing the saccharide content.

### <<Production method of present invention>>

The squeezed carrot juice of the present invention can be produced by squeezing carrot by a conventional method to prepare a squeezed carrot juice or a concentrate thereof, reducing the saccharide concentration of the squeezed carrot juice by water addition or any other means, and further adding a fructooligosaccharide and/or an inulin thereto. Either of the procedure of reducing the saccharide concentration or the procedure of adding a fructooligosaccharide or the like may be carried out first, and these procedures may be carried out simultaneously. When a concentrate of the squeezed carrot juice is used as a raw material, the sugar content may be adjusted, by water addition, to be equal to that of the 100% squeezed carrot juice. A commercial squeezed carrot juice or a concentrate or paste thereof may be used as the raw material squeezed carrot juice and the concentrate thereof, and, in that case, the squeezing step can be omitted. A saccharide such as glucose, fructose, galactose, sucrose, maltose or lactose may be added before, after, or simultaneously with the procedures described above so long as the flavor of the squeezed carrot juice would not be impaired and the squeezed carrot juice is low in saccharides.

As the means for reducing the saccharide concentration of the squeezed carrot juice, fermentation by microorganisms such as lactic acid bacteria and yeast is also conceivable, in addition to the means described above. However, any means other than fermentation are preferred since fermentation causes changes in ingredients other than the saccharide so that the nutrition and flavor inherent in carrot cannot be expected.

The squeezed carrot juice and the concentrate according to the present invention can also be produced by squeezing carrot by a conventional method to prepare a squeezed carrot juice or a concentrate thereof, and causing a glycosyltransferase preparation to act on the squeezed carrot juice or the concentrate thereof. The glycosyltransferase preparation can be used to reduce the saccharide concentration of the squeezed carrot juice or the concentrate thereof and to generate a fructooligosaccharide. Examples of usable glycosyltransferase preparations include those composed of one or more enzyme(s) which generate(s) a fructooligosaccharide or an inulin from sucrose, and, more specifically, include fructosyltransferase and levansucrase. In the case of using the squeezed carrot juice or the concentrate thereof comprising fructosyltransferase as the glycosyltransferase preparation, reaction conditions can be set so that the saccharide concentration of the squeezed carrot juice or the concentrate thereof is reduced to a predetermined value or less, and that a fructooligosaccharide would be generated in an amount enough to improve the flavor. For example, it is possible to add fructosyltransferase to the squeezed carrot juice or the concentrate thereof in an amount of 100 to 150 units per 100 g of the squeezed carrot juice and to carry out an enzyme reaction under conditions of 20 to 50°C and 100 to 200 minutes. Those skilled in the art can appropriately set the reaction conditions such as reaction temperature and reaction time according, for example, to the amount of the enzyme to be used, referring to the above ranges, of course.

The carrot-containing vegetable beverage and carrot-containing vegetable fruit beverage according to the present invention can be produced according to known procedures and conditions except that the squeezed carrot juice and/or concentrate according to the present invention are/is blended. Specifically, the carrot-containing vegetable beverage and carrot-containing vegetable fruit beverage of the present invention can be produced, for example, through a squeezing step and a formulation step. Blending of the squeezed carrot juice of the present invention in other raw materials can be carried out in the above formulation step. A commercial concentrate or vegetable paste or the like may be utilized for the squeezed juice to be formulated in the formulation step. In that case, the squeezing step can be omitted. The liquid formulation obtained in the formulation step can be packed in a container through a sterilization step and a charging step. The container-packed beverage of the present invention can be subjected to a sealing step and a cooling step, according to need.

The carrot-containing vegetable beverage and carrot-containing vegetable fruit beverage according to the present invention can also be produced by causing a glycosyltransferase preparation to act on a vegetable juice or a liquid mixture of a vegetable juice and a fruit juice obtained through the squeezing step and the formulation step. Usable glycosyltransferase preparation and enzyme reaction conditions are as described above. Also, the reaction liquid after the enzyme reaction can be packed in a container through the sterilization step and the charging step as with the above case, and subjected to the sealing step and the cooling step according to need.

An additive for beverages, which is used in normal beverage formulation design, may be blended in the carrot-containing vegetable beverage and carrot-containing vegetable fruit beverage according to the present invention. Examples of such an additive include sweeteners (including high-intensity sweeteners), acidulants, seasonings, spices, perfumes, coloring agents, thickeners, stabilizers, emulsifiers, enrichments, pH adjusting agents, antioxidants and preservatives. The additives for beverages indicated above can be mixed with other raw materials in the formulation step.

According to another aspect of the present invention, there is provided a method for improving the flavor of a squeezed carrot juice and a concentrate thereof as well as a carrot-containing vegetable beverage and a carrot-containing vegetable fruit beverage each having a saccharide concentration of 2.5 g/100 mL or less, the method comprising the step of blending or generating either or both of a fructooligosaccharide and an inulin. The method for improving the flavor according to the present invention can be carried out in accordance with the descriptions concerning the squeezed carrot juice and the concentrate thereof, the carrot-containing vegetable beverage and carrot-containing vegetable fruit beverage, and methods for producing the same, according to the present invention.

According to still another aspect of the present invention, there is provided use of either or both of a fructooligosaccharide and an inulin as an agent for improving the flavor of a squeezed carrot juice and a concentrate thereof as well as a carrot-containing vegetable beverage and a carrot-containing vegetable fruit beverage each having a saccharide concentration of 2.5 g/100 mL or less wherein the agent is used so that the contents of the fructooligosaccharide and the inulin in the beverage satisfy Formula (I) as defined in appended claim 1. The use of the present invention can thus be carried out in accordance with the descriptions concerning the squeezed carrot juice and the concentrate thereof, the carrot-containing vegetable beverage and carrot-containing vegetable fruit beverage, and methods for producing the same, according to the present invention.

### EXAMPLES

Hereinafter, the present invention will be described in more detail by way of the following examples, but is not limited thereto.

### Measurement of saccharide concentration, sugar composition and sugar content (Bx value)

In the following examples, the saccharide concentration and sugar composition of each sample beverage were analyzed according to the high-performance liquid chromatographic method (HPLC method). Specifically, measurement was made as follows.

A sample liquid was diluted with water to prepare a solution containing about 2% of sugar. The centrifuged supernatant was filtered through a filter to remove impurities, and the filtrate was mixed with acetonitrile to prepare a 50% acetonitrile solution. This solution was analyzed with HPLC (produced by JASCO Corporation) according to the following conditions to calculate its saccharide concentration. The saccharide concentration was obtained by calculating a total value of the concentrations of glucose, fructose and sucrose measured with HPLC.

### <HPLC analysis conditions>

Column: YMC-Pack Polyamine II (produced by YMC CO., LTD.)
Mobile phase: 67% (v/v) acetonitrile solution
Column temperature: 30°C
Flow rate: 1.0 mL/min.
Detection: differential refractive index detector

The sugar content (Bx value) was measured with a saccharimeter (Rx-5000α, produced by ATAGO CO., LTD.).

### Example 1 (Reference Example): Analysis of influence of saccharide concentration on aroma/taste of carrot-containing beverage

Carrot-containing beverages each having a predetermined saccharide concentration were prepared to analyze the influences of the saccharide concentration on the aroma/taste.

### (1) Preparation of sample beverage

There were provided three kinds of beverages, i.e., a product (hereinafter referred to as "squeezed carrot juice (Bx 6)") obtained by diluting a concentrate of a squeezed carrot juice (hereinafter referred to as "carrot concentrate") (Bx 55) with water so as to attain the sugar content (Bx 6) of a 100% squeezed carrot juice as the sugar content (Bx value) inherent in the squeezed carrot juice, a carrot-containing beverage mix juice (commercial product), and a carrot-containing vegetable fruit mix juice (commercial product). The saccharide concentrations of these beverages, when measured, were 4.0 g/100 mL, 5.0 g/100 mL and 6.2 g/100 mL, respectively. These beverages were defined as reference sample beverages (Samples Nos. 3, 14 and 25), and the reference sample beverages were diluted with water so as to attain the saccharide concentrations indicated in Table 1 to prepare sample beverages (Samples Nos. 1, 2, 11 to 13, and 21 to 24).

### (2) Sensory evaluation

The sample beverages prepared in the above (1) were subjected to sensory evaluation. Specifically, it was evaluated, according to the following evaluation criteria, whether the natural carrot aroma/taste inherent in the respective reference sample beverages could be perceived from the respective sample beverages. The score of the reference sample beverages was defined as score 2 among the following evaluation criteria.
Score 2: It had the natural carrot aroma/taste inherent in the beverage and could be recognized as being identical with the beverage.
Score 1: The natural carrot aroma/taste inherent in the beverage was being lost.
Score 0: The natural carrot aroma/taste inherent in the beverage was lost.

The sensory evaluation was carried out by four trained panelists. The average value of the evaluation scores obtained from the four panelists was calculated, and the samples having an average value of 1 or more were ranked as ∘; the samples having an average value of 0.2 or more and less than 1 were ranked as △; and the samples having an average value of less than 0.2 were ranked as ×.

### (3) Evaluation results

The results of the sensory evaluation are indicated in Table 1.

**[Table 1]**

| Table 1A: Influence of saccharide concentration on aroma/taste of squeezed carrot juice | | | |
|---|---|---|---|
| Sample No. | 1 | 2 | 3 |
| Saccharide concentration (g/100 mL) | 2.5 | 3.0 | 4.0 |
| Sensory evaluation results | × | △ | ○ |

**Table 1B: Influence of saccharide concentration on aroma/taste of carrot-containing vegetable mix juice**

| Sample No. | 11 | 12 | 13 | 14 |
|---|---|---|---|---|
| Saccharide concentration (g/100 mL) | 2.5 | 3.0 | 4.0 | 5.0 |
| Sensory evaluation results | × | ○ | ○ | ○ |

**Table 1C: Influence of saccharide concentration on aroma/taste of carrot-containing vegetable fruit mix juice**

| Sample No. | 21 | 22 | 23 | 24 | 25 |
|---|---|---|---|---|---|
| Saccharide concentration (g/100 mL) | 2.5 | 3.5 | 4.5 | 5.0 | 6.2 |
| Sensory evaluation results | × | × | × | △ | ○ |

From the results indicated in Table 1, it was confirmed that the squeezed carrot juices and carrot-containing vegetable mix juices lost the natural carrot aroma/taste inherent in the beverages when the saccharide concentration was 2.5 g/100 mL or less, and that the carrot-containing vegetable fruit mix juices lost the natural carrot aroma/taste inherent in the beverage when the saccharide concentration was 4.5 g/100 mL or less.

### Example 2: Analysis of influence of fructooligosaccharides on aroma/taste of squeezed carrot juice

Beverages each having a predetermined saccharide concentration and a predetermined fructooligosaccharide concentration were prepared to analyze the influences of the fructooligosaccharides on the natural carrot aroma/taste of squeezed carrot juices having a low saccharide content.

### (1) Preparation of fructooligosaccharides-added sample beverage

To beverage bases (control sample beverages) with various saccharide concentrations obtained by diluting the squeezed carrot juice (Bx 6) with water so as to attain saccharide concentrations of 1.0, 1.5, 2.5, and 3.0 g/100 mL, respectively, fructooligosaccharides (purity: 95% or more, produced by Meiji Food Materia Co., Ltd.; the same applies hereinafter) was added so as to attain the oligosaccharide concentrations indicated in Table 2, thereby preparing sample beverages (Samples Nos. 31 to 35, 41 to 45, 51 to 55, and 61 to 65) having various saccharide concentrations and various fructooligosaccharide concentrations.

### (2) Sensory evaluation of fructooligosaccharides-added sample beverage

The fructooligosaccharides-added sample beverages prepared in the above (1) were subjected to sensory evaluation. Specifically, for the sample beverages added with fructooligosaccharides so as to attain the predetermined oligosaccharide concentrations, it was evaluated, according to the following evaluation criteria, whether a difference in natural carrot aroma/taste could be perceived (the recovery of the aroma/taste could be perceived) in comparison with the control sample beverages.
Score 2: A difference in natural carrot aroma/taste was clearly perceived.
Score 1: A difference in natural carrot aroma/taste was slightly perceived.
Score 0: No difference in natural carrot aroma/taste was perceived.

The sensory evaluation was carried out by five trained panelists. The average value of the evaluation scores obtained from the five panelists was calculated, and the samples having an average value of 0.75 or more were ranked as ∘; the samples having an average value of 0.2 or more and less than 0.75 were ranked as △; and the samples having an average value of less than 0.2 were ranked as ×.

### (3) Evaluation results

The results of the sensory evaluation are indicated in Table 2.

**[Table 2]**

| Table 2: Influence of fructooligosaccharides on aroma/taste of squeezed carrot juice | | | | | |
|---|---|---|---|---|---|
| Sample No. | 31* | 32 | 33 | 34 | 35 |
| Saccharide concentration (g/100 mL) | 1.0 | | | | |
| Fructooligosaccharide concentration (g/100 mL) | 0.2 | 0.3 | 0.6 | 0.9 | 1.2 |
| Sensory evaluation results | × | △ | ○ | ○ | ○ |

| | | | | | |
|---|---|---|---|---|---|
| * Comparative Sample | | | | | |

**Table 2: Influence of fructooligosaccharides on aroma/taste of squeezed carrot juice (continued)**

| Sample No. | 41* | 42 | 43 | 44 | 45 |
|---|---|---|---|---|---|
| Saccharide concentration (g/100 mL) | 1.5 | | | | |
| Fructooligosaccharide concentration (g/100 mL) | 0.2 | 0.3 | 0.6 | 0.9 | 1.2 |
| Sensory evaluation results | × | △ | ○ | ○ | ○ |

| | | | | | |
|---|---|---|---|---|---|
| * Comparative Sample | | | | | |

**Table 2: Influence of fructooligosaccharides on aroma/taste of squeezed carrot juice (continued)**

| Sample No. | 51* | 52 | 53 | 54 | 55 |
|---|---|---|---|---|---|
| Saccharide concentration (g/100 mL) | 2.5 | | | | |
| Fructooligosaccharide concentration (g/100 mL) | 0.2 | 0.3 | 0.6 | 0.9 | 1.2 |
| Sensory evaluation results | △ | ○ | ○ | ○ | ○ |

| | | | | | |
|---|---|---|---|---|---|
| * Comparative Sample | | | | | |

**Table 2: Influence of fructooligosaccharides on aroma/taste of squeezed carrot juice (continued)**

| Sample No. | 61* | 62* | 63* | 64* | 65* |
|---|---|---|---|---|---|
| Saccharide concentration (g/100 mL) | 3.0 | | | | |
| Fructooligosaccharide concentration (g/100 mL) | 0.2 | 0.3 | 0.6 | 0.9 | 1.2 |
| Sensory evaluation results | × | ○ | ○ | ○ | ○ |

| | | | | | |
|---|---|---|---|---|---|
| * Comparative Sample | | | | | |

From the results indicated in Table 2, it was confirmed that, even in the case of the squeezed carrot juices having a saccharide concentration of 2.5 g/100 mL or less, the natural carrot aroma/taste could be recovered by adjusting the fructooligosaccharide concentration to 0.3 g/100 mL or more.

### (4) Preparation and sensory evaluation of sucrose-added sample beverage and the like

For the sample beverages in which the recovery of the natural carrot aroma/taste had been observed upon addition of the fructooligosaccharides, the changed aroma/taste was evaluated. The evaluation was made by analyzing a difference in aroma/taste to be improved when sucrose was added in place of the fructooligosaccharides. Specifically, sucrose was added to beverage bases with various saccharide concentrations obtained by diluting the squeezed carrot juice (Bx 6) with water so as to attain saccharide concentrations of 1.0, 1.5, 2.5, and 3.0 g/100 mL, respectively, so as to attain the same degrees of sweetness as the respective fructooligosaccharide concentrations at which a difference in aroma/taste (recovery) was perceived in Table 2, thereby preparing sucrose-added sample beverages having various saccharide concentrations and various sucrose concentrations. Calculation was made on the premise that the degree of sweetness of the fructooligosaccharides was 0.3 and that the degree of sweetness of sucrose was 1.0.

The sensory evaluation was carried out by four trained panelists. Specifically, the fructooligosaccharides-added sample beverages and the sucrose-added sample beverages prepared to have the same degrees of sweetness as those of the fructooligosaccharides-added sample beverages were compared in terms of the improved aroma/taste (especially, change in natural carrot taste). As the result, it was confirmed that, for the fructooligosaccharides-added sample beverages, the natural carrot taste could be perceived, not only the sweetness, but also the body feeling and full-flavored feeling inherent in the squeezed carrot juices were increased, and further the aftertaste was improved, in comparison with the sucrose-added sample beverages.

High-intensity sweeteners (stevia, acesulfame K and aspartame) were also subjected to sensory evaluation similar to the above sensory evaluation. Specifically, high intensity sweetener-added sample beverages were prepared similarly to the sucrose-added sample beverages, and subjected to sensory evaluation according to similar procedures. (Calculation was made on the premise that the degrees of sweetness of the high-intensity sweeteners were all 200.) As the result, it was confirmed that the respective high intensity sweetener-added sample beverages were enhanced in artificial sweetness in comparison with the fructooligosaccharides-added sample beverages, but that the features identified in the fructooligosaccharides-added sample beverages (increase not only in sweetness, but also in body feeling and full-flavored feeling inherent in the squeezed carrot juices, and improvement in aftertaste) were not be found.

As reviewed above, from the fact that the addition of fructooligosaccharides to a squeezed carrot juice having a low saccharide content increased the body feeling and full-flavored feeling of the squeezed carrot juice and improved the aftertaste, it was confirmed that the fructooligosaccharides greatly contributed to the improvement in aroma/taste of low-saccharide squeezed carrot juices.

### Example 3: Analysis of influence of fructooligosaccharides on aroma/taste of carrot-containing vegetable mix juice

Beverages each having a predetermined saccharide concentration and a predetermined fructooligosaccharide concentration were prepared to analyze the influences of the fructooligosaccharide concentration on the natural carrot aroma/taste of carrot-containing vegetable mix juices having a low saccharide content.

### (1) Preparation of fructooligosaccharides-added sample beverage

To beverage bases (control sample beverages) with various saccharide concentrations obtained by diluting the carrot-containing vegetable mix juice (commercial product) with water so as to attain saccharide concentrations of 1.0, 1.5 and 2.5 g/100 mL, respectively, fructooligosaccharides was added so as to attain the oligosaccharide concentrations indicated in Table 3, thereby preparing sample beverages (Samples Nos. 71 to 74, 81 to 84, and 91 to 94) having various saccharide concentrations and various fructooligosaccharide concentrations.

### (2) Sensory evaluation of fructooligosaccharides-added sample beverage

The fructooligosaccharides-added sample beverages prepared in the above (1) were subjected to sensory evaluation according to the procedures described in Example 2 by four panelists.

### (3) Evaluation results

The results of the sensory evaluation are indicated in Table 3.

**[Table 3]**

| Table 3: Influence of fructooligosaccharides on aroma/taste of carrot-containing vegetable mix juice | | | | |
|---|---|---|---|---|
| Sample No. | 71* | 72 | 73 | 74 |
| Saccharide concentration (g/100 mL) | 1.0 | | | |
| Fructooligosaccharide concentration (g/100 mL) | 0.2 | 0.3 | 0.6 | 0.9 |
| Sensory evaluation results | × | △ | ○ | ○ |

| | | | | |
|---|---|---|---|---|
| * Comparative Sample | | | | |

**Table 3: Influence of fructooligosaccharides on aroma/taste of carrot-containing vegetable mix juice (continued)**

| Sample No. | 81* | 82 | 83 | 84 |
|---|---|---|---|---|
| Saccharide concentration (g/100 mL) | 1.5 | | | |
| Fructooligosaccharide concentration (g/100 mL) | 0.2 | 0.3 | 0.6 | 0.9 |
| Sensory evaluation results | × | △ | ○ | ○ |

| | | | | |
|---|---|---|---|---|
| * Comparative Sample | | | | |

**Table 3: Influence of fructooligosaccharides on aroma/taste of carrot-containing vegetable mix juice (continued)**

| Sample No. | 91* | 92 | 93 | 94 |
|---|---|---|---|---|
| Saccharide concentration (g/100 mL) | 2.5 | | | |
| Fructooligosaccharide concentration (g/100 mL) | 0.2 | 0.3 | 0.6 | 0.9 |
| Sensory evaluation results | × | △ | ○ | ○ |

| | | | | |
|---|---|---|---|---|
| * Comparative Sample | | | | |

From the results indicated in Table 3, it was confirmed that, even in the case of the carrot-containing vegetable mix juices having a saccharide concentration of 2.5 g/100 mL or less, the natural carrot aroma/taste of the carrot-containing vegetable mix juices could be recovered by adjusting the fructooligosaccharide concentration to 0.3 g/100 mL or more.

### (4) Preparation and sensory evaluation of sucrose-added sample beverage

For the sample beverages (carrot-containing vegetable mix juices) in which the recovery of the natural carrot aroma/taste had been observed upon addition of the fructooligosaccharides, the changed aroma/taste was evaluated. The evaluation was made by analyzing a difference in aroma/taste to be improved when sucrose was added in place of the fructooligosaccharides. Specifically, to beverage bases with various saccharide concentrations obtained by diluting the carrot-containing vegetable mix juice (commercial product) with water so as to attain saccharide concentrations of 1.0, 1.5 and 2.5 g/100 mL, respectively, sucrose was added so as to attain the same degrees of sweetness as the respective fructooligosaccharide concentrations at which the recovery of the natural carrot aroma/taste was perceived in Table 3, thereby preparing sucrose-added sample beverages having various saccharide concentrations and various sucrose concentrations.

The sensory evaluation was carried out by four trained panelists. Specifically, the fructooligosaccharides-added sample beverages and the sucrose-added sample beverages prepared to have the same degrees of sweetness as those of the fructooligosaccharides-added sample beverages were compared in terms of the improved aroma/taste (especially, change in natural carrot taste). As the result, it was confirmed that the fructooligosaccharides-added sample beverages were enhanced in body feeling and had a mild aftertaste, as compared with the sucrose-added sample beverages. It was inferred that these features of the carrot-containing vegetable mix juices were obtained by contribution of the features confirmed upon addition of the fructooligosaccharides to the squeezed carrot juices in Example 2.

### Example 4: Analysis of influence of fructooligosaccharides on aroma/taste of carrot-containing vegetable fruit mix juice

Beverages each having a predetermined saccharide concentration and a predetermined fructooligosaccharide concentration were prepared to analyze the influences of the fructooligosaccharide concentration on the natural carrot aroma/taste of carrot-containing vegetable fruit mix juices having a low saccharide content.

### (1) Preparation of oligosaccharide-added sample beverage

To beverage bases (control sample beverages) with various saccharide concentrations obtained by diluting the carrot-containing vegetable fruit mix juice (commercial product) with water so as to attain saccharide concentrations of 2.5, 3.5 and 4.5 g/100 mL, respectively, fructooligosaccharides was added so as to attain the oligosaccharide concentrations indicated in Table 4, thereby preparing sample beverages (Samples Nos. 101 to 104, 111 to 114, and 121 to 124) having various saccharide concentrations and various fructooligosaccharide concentrations.

### (2) Sensory evaluation of fructooligosaccharides-added sample beverage

The fructooligosaccharides-added sample beverages prepared in the above (1) were subjected to sensory evaluation according to the procedures described in Example 2 by four panelists.

### (3) Evaluation results

The results of the sensory evaluation are indicated in Table 4.

**[Table 4]**

| Table 4: Influence of fructooligosaccharides on aroma/taste of carrot-containing vegetable fruit mix juice | | | | |
|---|---|---|---|---|
| Sample No. | 101* | 102 | 103 | 104 |
| Saccharide concentration (g/100 mL) | 2.5 | | | |
| Fructooligosaccharide concentration (g/100 mL) | 0.2 | 0.3 | 0.6 | 0.9 |
| Sensory evaluation results | × | △ | ○ | ○ |

| | | | | |
|---|---|---|---|---|
| * Comparative Sample | | | | |

**Table 4: Influence of fructooligosaccharides on aroma/taste of carrot-containing vegetable fruit mix juice (continued)**

| Sample No. | 111* | 112 | 113 | 114 |
|---|---|---|---|---|
| Saccharide concentration (g/100 mL) | 3.5 | | | |
| Fructooligosaccharide concentration (g/100 mL) | 0.2 | 0.3 | 0.6 | 0.9 |
| Sensory evaluation results | × | △ | ○ | ○ |

| | | | | |
|---|---|---|---|---|
| * Comparative Sample | | | | |

**Table 4: Influence of fructooligosaccharides on aroma/taste of carrot-containing vegetable fruit mix juice (continued)**

| Sample No. | 121* | 122 | 123 | 124 |
|---|---|---|---|---|
| Saccharide concentration (g/100 mL) | 4.5 | | | |
| Fructooligosaccharide concentration (g/100 mL) | 0.2 | 0.3 | 0.6 | 0.9 |
| Sensory evaluation results | × | ○ | ○ | ○ |

| | | | | |
|---|---|---|---|---|
| * Comparative Sample | | | | |

From the results indicated in Table 4, it was confirmed that, even in the case of the carrot-containing vegetable fruit mix juices having a saccharide concentration of 4.5 g/100 mL or less, the natural carrot aroma/taste of the carrot-containing vegetable fruit mix juices could be recovered by adjusting the fructooligosaccharide concentration to 0.3 g/100 mL or more.

### (4) Preparation and sensory evaluation of sucrose-added sample beverage

For the sample beverages (carrot-containing vegetable fruit mix juices) in which the recovery of the natural carrot aroma/taste had been found upon addition of the fructooligosaccharides, the changed aroma/taste was evaluated. The evaluation was made by analyzing a difference in aroma/taste to be improved when sucrose was added in place of the fructooligosaccharides. Specifically, to beverage bases with various saccharide concentrations obtained by diluting the carrot-containing vegetable fruit mix juice (commercial product) with water so as to attain saccharide concentrations of 2.5, 3.5 and 4.5 g/100 mL, respectively, sucrose was added so as to attain the same degrees of sweetness as the respective fructooligosaccharide concentrations at which the recovery of the natural carrot aroma/taste was perceived in Table 4, thereby preparing sucrose-added sample beverages having various saccharide concentrations and various sucrose concentrations.

The sensory evaluation was carried out by four trained panelists. Specifically, the fructooligosaccharides-added sample beverages and the sucrose-added sample beverages prepared to have the same degrees of sweetness as those of the fructooligosaccharides-added sample beverages were compared in terms of the improved aroma/taste (especially, change in natural carrot taste). As the result, it was confirmed that the fructooligosaccharides-added sample beverages were enhanced in body feeling and had a mild aftertaste, as compared with the sucrose-added sample beverages. It was inferred that these features of the carrot-containing vegetable fruit mix juices were obtained by contribution of the features observed upon addition of the fructooligosaccharides to the squeezed carrot juices in Example 2.

### Example 5: Analysis of influence of fructooligosaccharide content on aroma/taste

In squeezed carrot juices, carrot-containing vegetable mix juices and carrot-containing vegetable fruit mix juices having a low saccharide content, the influences of the fructooligosaccharide content on the aroma/taste of these beverages were analyzed.

### (1) Preparation of sample beverage

Beverage bases with various saccharide concentrations were prepared by diluting the squeezed carrot juice (Bx 6) (control sample beverage) and the carrot-containing vegetable mix juice (commercial product, control sample beverage) with water so as to attain saccharide concentrations of 1.0 and 2.5 g/100 mL, respectively, and beverage bases with various saccharide concentrations were prepared by diluting the carrot-containing vegetable fruit mix juice (commercial product, control sample beverage) with water so as to attain saccharide concentrations of 2.5 and 4.5 g/100 mL, respectively. Fructooligosaccharides were added to the respective beverage bases so as to attain fructooligosaccharide concentrations of 2.0, 3.0, 4.0, 5.0, 6.0, and 7.0 g/100 mL, thereby preparing sample beverages having various saccharide concentrations and various fructooligosaccharide concentrations.

### (2) Sensory evaluation

The sample beverages prepared in the above (1) were subjected to sensory evaluation. Specifically, there were selected the sample beverages with the lowest fructooligosaccharide concentration at which a difference in aroma/taste was perceived (unbalanced aroma/taste or artificial sweetness was perceived) as compared with the respective control sample beverages. The sensory evaluation was carried out by four trained panelists, and an average value of the fructooligosaccharide concentrations of the beverages selected by the four panelists was calculated.

### (3) Evaluation results

The results of the sensory evaluation are indicated in Table 5.

**[Table 5]**

| Table 5: Influence of fructooligosaccharides concentration on aroma/taste | | |
|---|---|---|
| | Saccharide concentration (g/100 mL) | Lowest fructooligosaccharide concentration (g/100 mL) at which difference in aroma/taste was perceived |
| Squeezed carrot juice | 1.0 | 4.3 |
| | 2.5 | 3.0 |
| Carrot-containing vegetable mix juice | 1.0 | 4.1 |
| | 2.5 | 3.3 |
| Carrot-containing vegetable fruit mix juice | 2.5 | 3.8 |
| | 4.5 | 3.3 |

From the results indicated in Table 5, it was confirmed that beverages having more natural aroma/taste could be provided by adjusting the fructooligosaccharide concentration to less than 4.3 g/100 mL in the squeezed carrot juices having a saccharide concentration of 1.0 g/100 mL or less, adjusting the fructooligosaccharide concentration to less than 3.0 g/100 mL in the squeezed carrot juices having a saccharide concentration of 2.5 g/100 mL or less, adjusting the fructooligosaccharide concentration to less than 3.3 g/100 mL in the carrot-containing vegetable mix juices having a saccharide concentration of 2.5 g/100 mL or less, and adjusting the fructooligosaccharide concentration to less than 3.3 g/100 mL in the carrot-containing vegetable fruit mix juices having a saccharide concentration of 4.5 g/100 mL or less, respectively.

### Example 6: Analysis of aroma/taste of squeezed carrot juice having saccharide content reduced by enzyme treatment

Beverages each having a fructooligosaccharide concentration increased and a saccharide content reduced by treatment of a squeezed carrot juice with a glycosyltransferase were prepared to analyze the influences of the fructooligosaccharide concentration on the natural carrot aroma/taste.

### (1) Preparation of sample beverage

To a squeezed carrot juice obtained by diluting the carrot concentrate (Bx 55) with water so as to attain a Bx of 18, fructosyltransferase (derived from the genus *Aspergillus)* was added in an amount of 150 units per 100 g of the squeezed carrot juice to carry out a transglycosylation reaction under conditions of 40°C and 3 hours. The squeezed carrot juice after the reaction was diluted so as to attain a sugar content (Bx) of 6, and the diluted juice was held at 80°C for 10 minutes to inactivate the enzyme. When the sugar composition of this squeezed carrot juice (enzyme-treated squeezed carrot juice) was measured by the HPLC method, the saccharide concentration was 1.8 g/100 mL, and the fructooligosaccharide concentration was 1.8 g/100 mL. The enzyme-treated squeezed carrot juice was mixed with the squeezed carrot juice (Bx 6) and a sucrose solution to prepare sample beverages (Samples Nos. 131 to 134) having the saccharide concentration and fructooligosaccharide concentrations indicated in Table 6. The beverage obtained by diluting the squeezed carrot juice (Bx 6) so as to attain a saccharide concentration of 2.5 g/100 mL was defined as a control sample beverage (fructooligosaccharide concentration: 0 g/100 mL).

### (2) Sensory evaluation

The sample beverages prepared in the above (1) were subjected to sensory evaluation according to the procedures described in Example 2 by four panelists.

### (3) Evaluation results

The results of the sensory evaluation are indicated in Table 6.

**[Table 6]**

| Table 6: Fnzvme-treated squeezed carrot juice and its aroma/taste | | | | |
|---|---|---|---|---|
| Sample No. | 131* | 132 | 133 | 134 |
| Saccharide concentration (g/100 mL) | 2.5 | | | |
| Fructooligosaccharide concentration (g/100 mL) | 0.2 | 0.3 | 0.6 | 0.9 |
| Sensory evaluation results | × | ○ | ○ | ○ |

| | | | | |
|---|---|---|---|---|
| * Comparative Sample | | | | |

From the results indicated in Table 6, it was confirmed that, even in the sample beverages having a saccharide reduced and fructooligosaccharides generated by glycosyltransferase treatment, the natural carrot aroma/taste of the squeezed carrot juice was recovered if the saccharide concentration was 2.5 g/100 mL or less and the fructooligosaccharide concentration was 0.3 g/100 mL or more. From the fact that the body feeling and full-flavored feeling inherent in the squeezed carrot juices were increased in the sample beverages having a saccharide reduced and fructooligosaccharides generated by glycosyltransferase treatment, it was confirmed that the oligosaccharide generated by fructosyltransferase enhanced the body feeling and full-flavored feeling inherent in the squeezed carrot juices.

### Example 7: Analysis of influence of inulin on aroma/taste of squeezed carrot juice

Beverages each having a predetermined saccharide concentration and a predetermined inulin concentration were prepared to analyze the influences of the inulin concentration on the natural carrot aroma/taste of squeezed carrot juices having a low saccharide content.

### (1) Preparation of inulin-added sample beverage

To a beverage base (control sample beverage) obtained by diluting the squeezed carrot juice (Bx 6) with water so as to attain a saccharide concentration of 2.5 g/100 mL, an inulin (purity: 90% or more, average polymerization degree: 16) was added so as to attain the inulin concentrations indicated in Table 7, thereby preparing sample beverages (Samples Nos. 141 to 143) having various inulin concentrations.

### (2) Sensory evaluation

The inulin-added sample beverages prepared in the above (1) were subjected to sensory evaluation according to the procedures described in Example 2 by four panelists.

### (3) Evaluation results

The results of the sensory evaluation are indicated in Table 7.

**[Table 7]**

| Table 7: Influence of inulin on aroma/taste of squeezed carrot juice | | | |
|---|---|---|---|
| Sample No. | 141* | 142 | 143 |
| Saccharide concentration (g/100 mL) | 2.5 | | |
| Inulin concentration (g/100 mL) | 0.6 | 0.9 | 2.4 |
| Sensory evaluation results | × | ○ | ○ |

| | | | |
|---|---|---|---|
| * Comparative Sample | | | |

From the results indicated in Table 7, it was confirmed that, even in the squeezed carrot juices having a saccharide concentration of 2.5 g/100 mL or less, the natural carrot aroma/taste of the squeezed carrot juices could be recovered by adjusting the inulin concentration to 0.9 g/100 mL or more. Also, in the beverages in which the recovery of the aroma/taste had been observed, the rich feeling of the squeezed carrot juices was increased. So, it was confirmed that the inulin improved the aroma/taste of a squeezed carrot juice having a low saccharide content.

## Claims

1. A squeezed carrot juice or a concentrate thereof, each having a saccharide concentration of 2.5 g/100 mL or less and comprising either or both of a fructooligosaccharide and an inulin, wherein the contents of the fructooligosaccharide and the inulin in the carrot juice and its concentrate satisfy Formula (I): $0.3 \leq F + \frac{1}{3} I$ wherein F represents the content (g/100 mL) of the fructooligosaccharide in the squeezed juice or the concentrate; and I represents the content (g/100 mL) of the inulin in the squeezed juice or the concentrate, and wherein the term saccharide refers to monosaccharides and disaccharides.

2. A carrot-containing vegetable beverage having a saccharide concentration of 2.5 g/100 mL or less and comprising either or both of a fructooligosaccharide and an inulin, wherein the contents of the fructooligosaccharide and the inulin in the beverage satisfy Formula (I): $0.3 \leq F + \frac{1}{3} I$ wherein F represents the content (g/100 mL) of the fructooligosaccharide in the beverage; and I represents the content (g/100 mL) of the inulin in the beverage, and wherein the term saccharide refers to monosaccharides and disaccharides.

3. A carrot-containing vegetable fruit beverage having a saccharide concentration of 4.5 g/100 mL or less and comprising either or both of a fructooligosaccharide and an inulin, wherein the contents of the fructooligosaccharide and the inulin in the beverage satisfy Formula (I) : $0.3 \leq F + \frac{1}{3} I$ wherein F represents the content (g/100 mL) of the fructooligosaccharide in the beverage; and I represents the content (g/100 mL) of the inulin in the beverage, and wherein the term saccharide refers to monosaccharides and disaccharides.

4. The carrot-containing beverage according to claim 2 or 3, which comprises the squeezed carrot juice or the concentrate thereof according to claim 1.

5. The carrot-containing beverage according to any one of claims 2 to 4, wherein the rate of carrot used in the beverage is 10% or more.

6. The squeezed carrot juice or the concentrate thereof as well as the carrot-containing beverage according to any one of claims 1 to 5, each of which comprise a fructooligosaccharide and have a fructooligosaccharide content of 0.3 g/100 mL or more.

7. The squeezed carrot juice or the concentrate thereof as well as the carrot-containing beverage according to any one of claims 1 to 5, each of which comprise an inulin and have an inulin content of 0.9 g/100 mL or more.

8. A method for producing the squeezed carrot juice or the concentrate thereof according to any one of claims 1 and 6 to 7, comprising the step of contacting a squeezed carrot juice or a concentrate thereof with a glycosyltransferase.

9. A method for producing the carrot-containing beverage according to any one of claims 2 to 7, comprising the step of mixing the squeezed carrot juice or the concentrate thereof produced in claim 8 with either or both of a squeezed vegetable juice and a squeezed fruit juice.

10. A method for producing an improved flavor squeezed carrot juice or a concentrate thereof or a carrot-containing vegetable beverage or a carrot-containing vegetable fruit beverage each having a saccharide concentration of 2.5 g/100 mL or less, the method comprising the step of blending or generating either or both of a fructooligosaccharide and an inulin wherein the contents of the fructooligosaccharide and the inulin in the carrot juice and the beverages satisfy Formula (I) as defined in claim 1, and wherein the term saccharide refers to monosaccharides and disaccharides.

11. Use of either or both of a fructooligosaccharide and an inulin as an agent for improving the flavor of a squeezed carrot juice or a concentrate thereof or a carrot-containing vegetable beverage or a carrot-containing vegetable fruit beverage each having a saccharide concentration of 2.5 g/100 mL or less wherein the agent is used so that the contents of the fructooligosaccharide and the inulin in the beverage satisfy Formula (I) as defined in claim 1, and wherein the term saccharide refers to monosaccharides and disaccharides.

## Patentansprüche

1. Ausgepresster Karottensaft oder ein Konzentrat davon, die jeweils eine Saccharidkonzentration von 2,5 g/100 ml oder weniger aufweisen und entweder ein Fructooligosaccharid oder ein Inulin oder beides umfassen, wobei die Gehalte des Fructooligosaccharids und des Inulins im Karottensaft und dessen Konzentrat die Formel (I) erfüllen: $0.3 \leq F + \frac{1}{3} I$ wobei F den Gehalt (g/100 ml) des Fructooligosaccharids im ausgepressten Saft oder im Konzentrat darstellt; und I den Gehalt (g/100 ml) des Inulins im ausgepressten Saft oder im Konzentrat darstellt, und wobei sich der Begriff Saccharid auf Monosaccharide und Disaccharide bezieht.

2. Karottenhaltiges Gemüsegetränk, das eine Saccharidkonzentration von 2,5 g/100 ml oder weniger aufweist und entweder ein Fructooligosaccharid oder ein Inulin oder beides umfasst, wobei die Gehalte des Fructooligosaccharids und des Inulins in dem Getränk die Formel (I) erfüllen: $0.3 \leq F + \frac{1}{3} I$ wobei F den Gehalt (g/100 ml) des Fructooligosaccharids im Getränk darstellt; und I den Gehalt (g/100 ml) des Inulins im Getränk darstellt, und wobei sich der Begriff Saccharid auf Monosaccharide und Disaccharide bezieht.

3. Karottenhaltiges Gemüse-Frucht-Getränk, das eine Saccharidkonzentration von 4,5 g/100 ml oder weniger aufweist und entweder ein Fructooligosaccharid oder ein Inulin oder beides umfasst, wobei die Gehalte des Fructooligosaccharids und des Inulins in dem Getränk die Formel (I) erfüllen: $0.3 \leq F + \frac{1}{3} I$ wobei F den Gehalt (g/100 ml) des Fructooligosaccharids im Getränk darstellt; und I den Gehalt (g/100 ml) des Inulins im Getränk darstellt, und wobei sich der Begriff Saccharid auf Monosaccharide und Disaccharide bezieht.

4. Karottenhaltiges Getränk nach Anspruch 2 oder 3, das den ausgepressten Karottensaft oder das Konzentrat davon nach Anspruch 1 umfasst.

5. Karottenhaltiges Getränk nach einem der Ansprüche 2 bis 4, wobei der Anteil an im Getränk verwendeten Karotten 10 % oder mehr beträgt.

6. Ausgepresster Karottensaft oder das Konzentrat davon sowie das karottenhaltige Getränk nach einem der Ansprüche 1 bis 5, die jeweils ein Fructooligosaccharid umfassen und einen Fructooligosaccharidgehalt von 0,3 g/100 ml oder mehr aufweisen.

7. Ausgepresster Karottensaft oder das Konzentrat davon sowie das karottenhaltige Getränk nach einem der Ansprüche 1 bis 5, die jeweils Inulin umfassen und einen Inulingehalt von 0,9 g/100 ml oder mehr aufweisen.

8. Verfahren zum Herstellen des ausgepressten Karottensafts oder des Konzentrats davon nach einem der Ansprüche 1 und 6 bis 7, umfassend den Schritt des Inkontaktbringens von ausgepresstem Karottensaft oder einem Konzentrat davon mit einer Glykosyltransferase.

9. Verfahren zum Herstellen des karottenhaltigen Getränks nach einem der Ansprüche 2 bis 7, umfassend den Schritt des Mischens des in Anspruch 8 produzierten ausgepressten Karottensafts oder des Konzentrats davon mit entweder einem ausgepressten Gemüsesaft und einem ausgepressten Fruchtsaft oder mit beiden.

10. Verfahren zum Produzieren eines ausgepressten Karottensafts oder eines Konzentrats davon oder eines karottenhaltigen Gemüsegetränks oder eines karottenhaltigen Gemüse-Frucht-Getränks mit verbessertem Geschmack, die jeweils eine Saccharidkonzentration von 2,5 g/100 ml oder weniger aufweisen, wobei das Verfahren den Schritt des Beimischens oder Erzeugens von entweder einem Fructooligosaccharid und einem Inulin oder von beiden umfasst, wobei die Gehalte des Fructooligosaccharids und des Inulins im Karottensaft und in den Getränken die in Anspruch 1 definierte Formel (I) erfüllen, und wobei sich der Begriff Saccharid auf Monosaccharide und Disaccharide bezieht.

11. Verwendung von entweder einem Fructooligosaccharid oder einem Inulin oder von beiden als Mittel zum Verbessern des Geschmacks eines ausgepressten Karottensafts oder eines Konzentrats davon oder eines karottenhaltigen Gemüsegetränks oder eines karottenhaltigen Gemüse-Frucht-Getränks, die jeweils eine Saccharidkonzentration von 2,5 g/100 ml oder weniger aufweisen, wobei das Mittel so verwendet wird, dass die Gehalte des Fructooligosaccharids und des Inulins im Getränk die in Anspruch 1 definierte Formel (I) erfüllen, und wobei sich der Begriff Saccharid auf Monosaccharide und Disaccharide bezieht.

## Revendications

1. Jus de carotte pressée ou concentré de celui-ci, présentant chacun une concentration en saccharides de 2,5 g/100 mL ou moins et comprenant un fructo-oligosaccharide, une inuline, ou les deux, dans lequel les teneurs en fructo-oligosaccharide et en inuline dans le jus de carotte et son concentré satisfont la formule (I) : $0.3 \leq F + \frac{1}{3} I$ dans laquelle F représente la teneur (g/100 mL) en fructo-oligosaccharide dans le jus pressé ou le concentré ; et I représente la teneur (g/100 mL) en inuline dans le jus pressé ou le concentré, et dans lequel le terme saccharide désigne des monosaccharides et des disaccharides.

2. Boisson aux légumes contenant de la carotte présentant une concentration en saccharides de 2,5 g/100 mL ou moins et comprenant un fructo-oligosaccharide, une inuline, ou les deux, dans laquelle les teneurs en fructo-oligosaccharide et en inuline dans la boisson satisfont la formule (I) : $0.3 \leq F + \frac{1}{3} I$ dans laquelle F représente la teneur (g/100 mL) en fructo-oligosaccharide dans la boisson ; et I représente la teneur (g/100 mL) en inuline dans la boisson, et dans laquelle le terme saccharide désigne des monosaccharides et des disaccharides.

3. Boisson aux légumes et aux fruits contenant de la carotte présentant une concentration en saccharides de 4,5 g/100 mL ou moins et comprenant un fructo-oligosaccharide, une inuline, ou les deux, dans laquelle les teneurs en fructo-oligosaccharide et en inuline dans la boisson satisfont la formule (I) : $0.3 \leq F + \frac{1}{3} I$ dans laquelle F représente la teneur (g/100 mL) en fructo-oligosaccharide dans la boisson ; et I représente la teneur (g/100 mL) en inuline dans la boisson, et dans laquelle le terme saccharide désigne des monosaccharides et des disaccharides.

4. Boisson contenant de la carotte selon la revendication 2 ou la revendication 3, qui comprend le jus de carotte pressée ou le concentré de celui-ci selon la revendication 1.

5. Boisson contenant de la carotte selon l'une quelconque des revendications 2 à 4, dans laquelle le taux de carotte utilisée dans la boisson est de 10 % ou plus.

6. Jus de carotte pressée ou concentré de celui-ci ainsi que boisson contenant de la carotte selon l'une quelconque des revendications 1 à 5, chacun d'entre eux comprenant un fructo-oligosaccharide et présentant une teneur en fructo-oligosaccharide de 0,3 g/100 mL ou plus.

7. Jus de carotte pressée ou concentré de celui-ci ainsi que boisson contenant de la carotte selon l'une quelconque des revendications 1 à 5, chacun d'entre eux comprenant une inuline et présentant une teneur en inuline de 0,9 g/100 mL ou plus.

8. Procédé de production du jus de carotte pressée ou du concentré de celui-ci selon l'une quelconque de la revendication 1 et des revendications 6 à 7, comprenant l'étape de mise en contact d'un jus de carotte pressée ou d'un concentré de celui-ci avec une glycosyltransférase.

9. Procédé de production de la boisson contenant de la carotte selon l'une quelconque des revendications 2 à 7, comprenant l'étape de mélange du jus de carotte pressée ou du concentré de celui-ci produit selon la revendication 8 avec un jus de légume pressé, un jus de fruit pressé, ou les deux.

10. Procédé de production d'un jus de carotte pressée à flaveur améliorée ou un concentré de celui-ci ou une boisson aux légumes contenant de la carotte ou une boisson aux légumes et aux fruits contenant de la carotte présentant chacun une concentration en saccharides de 2,5 g/100 mL ou moins, le procédé comprenant l'étape d'incorporation ou de génération d'un fructo-oligosaccharide, d'une inuline, ou des deux dans lequel les teneurs en fructo-oligosaccharide et en inuline dans le jus de carotte et les boissons satisfont la formule (I) telle que définie selon la revendication 1, et dans lequel le terme saccharide désigne des monosaccharides et des disaccharides.

11. Utilisation d'un fructo-oligosaccharide, d'une inuline, ou des deux comme agent d'amélioration de la flaveur d'un jus de carotte pressée ou d'un concentré de celui-ci ou d'une boisson aux légumes contenant de la carotte ou d'une boisson aux légumes et aux fruits contenant de la carotte présentant chacun une concentration en saccharides de 2,5 g/100 mL ou moins, dans laquelle l'agent est utilisé de sorte que les teneurs en fructo-oligosaccharide et en inuline dans la boisson satisfont la formule (I) telle que définie selon la revendication 1, et dans laquelle le terme saccharide désigne des monosaccharides et des disaccharides.
